**Europäisches Patentamt**

**European Patent Office**

**Office européen des brevets**

(19)

(11) Veröffentlichungsnummer: **0 235 737 B1**

(12) **EUROPÄISCHE PATENTSCHRIFT**

(45) Veröffentlichungstag der Patentschrift: **14.08.91**

(51) Int. Cl.⁵: **B01D 53/34**

(21) Anmeldenummer: **87102670.4**

(22) Anmeldetag: **25.02.87**

(54) Verfahren zur Regelung des Wasserhaushalts von nassen Rauchgasentschwefelungsanlagen.

(30) Priorität: **05.03.86 DE 3607192**

(43) Veröffentlichungstag der Anmeldung:
**09.09.87 Patentblatt 87/37**

(45) Bekanntmachung des Hinweises auf die
Patenterteilung:
**14.08.91 Patentblatt 91/33**

(84) Benannte Vertragsstaaten:
**AT BE CH DE ES FR GB GR IT LI LU NL SE**

(56) Entgegenhaltungen:
**DE-A- 2 922 735**

**PATENT ABSTRACTS OF JAPAN, Band 10,
Nr.103 (C-340)(2160), 18. April 1986; & JP-
A-60 235627 (MITSUBISHI JUKOGYO K.K.)
22.11.1985**

(73) Patentinhaber: **KRC Umwelttechnik GmbH
Alfred-Nobel-Strasse 20
W-8700 Würzburg 1(DE)**

(72) Erfinder: **Gutmayer, Harald, Dr. Dipl.-Ing.
Den-Haager-Strasse 16
W-8700 Würzburg(DE)**
Erfinder: **Scherer, Hans-Joachim Dipl.-Ing.
Am Oberen Bühl 3
W-8717 Mainstockheim(DE)**

(74) Vertreter: **Werner, Hans-Karsten, Dr. et al
Deichmannhaus am Hauptbahnhof
W-5000 Köln 1(DE)**

## Beschreibung

Gegenstand der vorliegenden Erfindung ist ein Verfahren zur Regelung des Wasserhaushalts von nassen Rauchgasentschwefelungsanlagen, insbesondere von zweistufigen Anlagen mit Kalkstein als Absorptionsmittel und Gips als Endprodukt, über den Pegelstand des Sumpfes und die Menge des über die Spülung der Tropfenabscheider zugeführten Prozeßwassers.

Insbesondere bei den von der Anmelderin gebauten und vertriebenen zweistufigen Rauchgasentschwefelungsanlagen mit Kalkstein als Absorptionsmittel und Gips als Endprodukt wird im oberen Kreislauf die Kalksteinsuspension in den Rauchgasstrom eingesprüht und über einen Trichter in den Tank für Absorptionsmittel zurückgeführt. Im unteren Kreislauf wird ein Gemisch aus Kalksteinsuspension, Gipssuspension usw. in den Rauchgasstrom eingesprüht, wobei durch Zufuhr von Luft die vollständige Oxidation des Calciumsulfits zum Calciumsulfat erfolgt. Der Rauchgasstrom sättigt sich während des Entschwefelungsvorganges mit Wasserdampf, so daß das Reingas einen Teil des Prozeßwassers abführt. Aus dem unteren Kreislauf wird insbesondere der grobteilige Anteil an Gips über einen Hydrozyklon abgetrennt und über einen Trommelfilter in feuchten Rauchgasgips und Filtrat aufgetrennt. Der Überlauf des Hydrozyklons wird wieder in den unteren Kreislauf zurückgeführt.

Der Wasserhaushalt des Verfahrens umfaßt das Prozeßwasser, das über die Spülung der Tropfenabscheider zugeführt wird, den im Reingas abgeführten Wasserdampf, das Filtrat des Trommelfilters und den Feuchtigkeitsgehalt des ausgetragenen Gipses. Das Prozeßwasser ist der Träger des Absorptionsmittels und fließt im Gegenstrom zum Rauchgas. In dem Maße, wie das Absorptionsmittel durch Prozeßwasser verdünnt wird, fließt es durch den Überlauf in den Sumpf des unteren Kreislaufes.

Der Wasserhaushalt der bisher betriebenen nassen Rauchgasentschwefelungsanlagen wurde daher bisher über den Pegelstand des Sumpfes und die Menge des über die Spülung der Tropfenabscheider zugeführten Prozeßwassers geregelt. Die Menge des zugeführten Prozeßwassers wurde bisher nach zuvor berechneten Lastfällen, beispielsweise in zwei bis vier Stufen, zugeführt. Eine genaue Anpassung an die realen Lastfälle war somit nicht möglich. Es wurde grundsätzlich mit einem Überschuß an Prozeßwasser gefahren. Das Gesamtsystem regelte sich dadurch, daß bei Überschreitung des Maximalpegels Suspension aus dem Sumpf abgepumpt wurde. Zuviel zugeführtes Prozeßwasser machte sich somit in höheren Mengen Filtrat bemerkbar und wurde in dieser Form aus dem Wasserhaushalt abgeführt. Insbesondere bei schwankenden Belastungen der Rauchgasentschwefelungsanlage war es bisher nicht möglich, die Menge des Prozeßwassers optimal zu steuern und damit auch die Menge und Zusammensetzung des Filtrates zu kontrollieren.

In der Zwischenzeit sind die Abwasservorschriften verschärft worden, so daß die Aufgabe besteht, Rauchgasentschwefelungsanlagen abwasserfrei oder quasi abwasserfrei zu fahren, d.h. in einer Weise, bei der kein Abwasser anfällt bzw. die anfallenden Mengen beispielsweise durch Eindampfung oder Rückführung in das Verfahren aufgearbeitet werden. Es bestand somit jetzt auch die Aufgabe, den Wasserhaushalt von nassen Rauchgasentschwefelungsanlagen so zu regeln und zu steuern, daß die Zufuhr an Prozeßwasser optimiert wird. Da Prozeßwasser praktisch ausschließlich zugeführt wird durch Spülung der Tropfenabscheider, muß andererseits dafür gesorgt sein, daß die Spülung der Tropfenabscheider auch bei schwankenden Mengen Prozeßwasser stets ausreichend bleibt, um die Tropfenabscheider von Verunreinigungen zu befreien. Bisher war es daher üblich, innerhalb vorgegebener Intervalle die Tropfenabscheider zu spülen, und zwar entweder als ganzes oder in unterteilten Sektoren, wobei die Grobabscheider häufiger und die Feinabscheider in längeren Intervallen bespült wurden. Um den Spüleffekt zu erzielen, muß die Spülung praktisch mit konstantem Druck und während einer ausreichenden Spüldauer betätigt werden, da sie anderenfalls ihre Aufgabe nicht erfüllen kann. Es ist somit nicht möglich, die Prozeßwasserzufuhr über eine kontinuierliche Mengenregelung zu steuern. Bei der Lösung der gestellten Aufgabe sollte weiterhin vermieden werden, daß keine vermaschten Regelkreise entstehen, die dazu neigen, sich rhytmisch aufzuschaukeln und dann zu erheblichen Betriebsstörungen führen können.

Die gestellte Aufgabe konnte überraschenderweise besonders einfach und elegant gelöst werden durch das Verfahren zur Regelung des Wasserhaushalts von nassen Rauchgasentschwefelungsanlagen, insbesondere von zweistufigen Anlagen mit Kalkstein als Absorptionsmittel und Gips als Endprodukt, über den Pegelstand des Sumpfes und die Menge des über die Spülung der Tropfenabscheider zugeführten Prozeßwassers, dadurch gekennzeichnet, daß

a) der Pegelstand des Sumpfes gemessen wird an den drei Punkten Max, Min 1 und Min 2,

b) die Spülung der Tropfenabscheider in variablen Zyklen erfolgt mit festen Sprühzeiten, aber variablen Sprühpausen,

c) die Ausschleusung von Suspension aus dem Sumpf zwecks Abtrennung von Feststoffen und Rückführung der Flüssigkeit gesteuert wird im Normalbetrieb nur über die Dichte der Suspension im Sumpf im Bereich der Meßpunkte Min 1 und Min 2 und nur im Notfall bei Überschreitung des Meßpunktes Max, unabhängig von der Dichte der Suspension.

Vorzugsweise erfolgt die Regelung automatisch, wobei die Schaltimpulse an den Meßpunkten Min 1 und Min 2 die Sprühpausen der Spülung der Tropfenabscheider steuern. Besonders einfach erfolgt dies dadurch, daß die Schaltimpulse an den Meßpunkten Min 1 und Min 2 die Sprühpausen der Spülung schrittweise verlängern oder verkürzen. Dies führt sogar dazu, daß das System lernfähig ist, da jeder Regelkreis für sich den Trend erkennt und sich optimiert. Dies verhindert, daß sich das System als ungedämpftes System aufschaukelt. Weiterhin hat dieses Verfahren den großen Vorteil, daß im Normalbetrieb die Suspension aus dem Sumpf nur über die Dichte gesteuert wird und damit in seiner Zusammensetzung nahezu konstantes Filtrat anfällt. Da keine unnötigen Mengen Prozeßwasser über die Spülung zugeführt werden, ist auch die Abwassermenge minimiert, so daß es möglich ist, abwasserfrei bzw. quasi abwasserfrei zu arbeiten.

Bei quasi abwasserfreier Fahrweise entstehen die geringstmöglichen Mengen Abwasser, die beispielsweise durch Eindampfung von den Ballaststoffen befreit werden können. Bei abwasserfreier Fahrweise wird das Filtrat in den Prozeß zurückgeführt. Die Ausschleusung der Verunreinigungen und löslichen Salze erfolgt dann ausschließlich über den Feuchtigkeitsgehalt des Rauchgasgipses. Diese Fahrweise ist insbesondere dann zu erwägen, wenn die Verunreinigungen und löslichen Salze im Rauchgasgips bei seiner weiteren Verwertung nicht stören.

Ein weiterer Vorteil des erfindungsgemäßen Verfahrens besteht darin, daß bei Rauchgasentschwefelungsanlagen mit zwei oder mehreren Waschtürmen, aber nur einem Absorptionsmittelversorgungstank die assymetrische Verteilung der Absorptionsmittelsuspension auf die einzelnen Waschtürme in einfachster Weise kompensiert werden kann. Erfindungsgemäß werden dazu die Differenzen zwischen den sich einstellenden Sprühpausen der einzelnen Waschtürme gemessen und zur Steuerung der Verteilung der Absorptionsmittelsuspension verwertet. Längere Sprühpausen in einem Waschturm bedeuten, daß diesem Turm zuviel Absorptionsmittelsuspension zugeführt wird, und kürzere Sprühpausen bedeuten, daß diesem Waschturm zuwenig Absorptionsmittelsuspension zugeführt wird. Sobald die Differenz zwischen den Sprühpausen einen gewissen Wert überschreitet, kann dieser Meßwert dazu verwendet werden, eine Pumpe für Absorptionsmittelsuspension für eine gewisse Zeit an- und dann wieder abzuschalten. Das erfindungsgemäße Verfahren gestattet somit in besonders einfacher Weise, auch dieses Problem zu lösen.

Zur Durchführung des erfindungsgemäßen Verfahrens wird beispielsweise ein Variationszähler mit einem Grundwert von T = 10 Minuten geladen. Dieser Wert wird ebenfalls in den Taktzähler übernommen. Der Taktgenerator (f = 1/T) wird freigegeben. Der Taktzähler wird jetzt vom jeweils geladenen Wert ab mit der Frequenz 1/ T so lange rückwärts gezählt, bis er den Wert 0 erreicht. Mit Erreichen des Wertes 0 werden folgende Aktionen ausgelöst:

a) Das Zeitglied T1 wird angestoßen und öffnet jetzt für die vorgegebene Zeit T1 eine der Absperrungen für die Spülung der Tropfenabscheider.

b) Der durch den Variationszähler bedingte Wert wird für den nächsten Zyklus in den Taktzähler übernommen.

Die Variation der Frequenz 1/T geschieht folgendermaßen:
Mit Erreichen der Meßpunkte in Sumpf Min 1 bzw. Min 2 wird der Variationszähler jeweils einen Schritt vor-bzw. rückwärts gezählt (Ein Schritt entspricht T). Der Zählerausgang ist also ein Maß für die Taktzeit. Das Ergebnis der Schaltung ist ein Impulssignal mit einer variablen Pause und einem konstanten Impuls.

Die Ausschleusung über Hydrozyklon aus dem Sumpf wird an- und abgeschaltet bei Unter- bzw. Überschreiten eines vorgegebenen Wertes für die spezifische Dichte der Suspension. Dabei kann das Flüssigkeitsniveau im Sumpf sich nur geringfügig verändern. Die Ausschleusung über den Hydrozyklon wird nur zusätzlich an- oder abgeschaltet, wenn die Meßpunkte Max oder Min 2 erreicht werden. Jedes Erreichen des Meßpunktes Min 2 bewirkt aber eine Verkürzung der Sprühpausen und damit eine erhöhte Zufuhr von Prozeßwasser.

Das erfindungsgemäße Verfahren ist selbstverständlich nicht nur für zweistufige Rauchgasentschwefelungsanlagen mit Kalkstein als Absorptionsmittel und Gips als Endprodukt einsetzbar, sondern prinzipiell für alle nassen Rauchgasentschwefelungsanlagen, bei denen der Wasserhaushalt über dem Pegelstand des Sumpfes und die Menge des zugeführten Prozeßwassers über die Spülung der Tropfenabscheider geregelt wird. So kann es auch bei einstufigen Verfahren zur Anwendung kommen, die aus dem Sumpf eine Suspension von festem Calciumsulfat/Calciumsulfit abtrennen, und bei denen ebenfalls bei schwankender Belastung durch Rauchgas der Wasserhaushalt erheblichen Schwankungen unterliegt und daher über die Zufuhr des Prozeßwassers geregelt werden sollte. Auch bei diesen Verfahren besteht das Problem, daß die Tropfenabscheider in mehr oder weniger regelmäßigen Abständen gespült werden müssen, um nicht zu verstopfen. Auch bei diesen Verfahren ist es nicht möglich, die Zuführung des Prozeßwassers in einfacher Weise zu regeln, da sonst die Spülfunktion nicht mehr erfüllt wird.

**Patentansprüche**

1. Verfahren zur Regelung des Wasserhaushalts von nassen Rauchgasentschwefelungsanlagen, insbesondere von zweistufigen Anlagen mit Kalkstein als Absorptionsmittel und Gips als Endprodukt, über den Pegelstand des Sumpfes und die Menge des über die Spülung der Tropfenabscheider zugeführten Prozeßwassers, dadurch gekennzeichnet, daß
   a) der Pegelstand des Sumpfes gemessen wird an den drei Punkten Max, Min 1 und Min 2,
   b) die Spülung der Tropfenabscheider in variablen Zyklen erfolgt mit festen Sprühzeiten, aber variablen Sprühpausen,
   c) die Ausschleusung von Suspension aus dem Sumpf zwecks Abtrennung von Feststoffen und Rückführung der Flüssigkeit gesteuert wird im Normalbetrieb nur über die Dichte der Suspension im Sumpf im Bereich der Meßpunkte Min 1 und Min 2 und nur im Notfall bei Überschreitung des Meßpunktes Max, unabhängig von der Dichte der Suspension.

2. Verfahren gemäß Anspruch 1, dadurch gekennzeichnet, daß die Regelung automatisch erfolgt, wobei die Schaltimpulse an den Meßpunkten Min 1 und Min 2 die Sprühpausen der Spülung der Tropfenabscheider steuern.

3. Verfahren gemäß Anspruch 2, dadurch gekennzeichnet, daß die Schaltimpulse an den Meßpunkten Min 1 und Min 2 die Sprühpausen der Spülung schrittweise verlängern oder verkürzen.

4. Verfahren gemäß Ansprüchen 1 bis 3, dadurch gekennzeichnet, daß bei Rauchgasentschwefelungsanlagen mit zwei oder mehreren Waschtürmen, aber nur einem Absorptionsmittelversorgungstank die Differenzen zwischen den sich einstellenden Sprühpausen der einzelnen Waschtürme gemessen werden und die gleichmäßige Verteilung der Absorptionsmittelsuspension auf die einzelnen Waschtürme steuern.

**Claims**

1. A process for controlling the water balance of wet flue gas desulfurization plants, particularly of two-stage plants, with limestone as the absorbing agent and gypsum as the final product, via pit level and amount of process water being fed via washing the mist eliminators, characterized in that
   a) said pit level is measured at the three points Max, Min 1, and Min 2;
   b) said washing of mist eliminators is carried out in variable cycles, with steady spraying periods but variable spraying breaks;
   c) the discharge of suspension from the pit to separate solid matter and refeed liquid in normal operation is controlled only via density of the suspension in the pit within the region of measuring points Min 1 and Min 2, and only in case of emergency by exceeding said measuring point Max, independently of suspension density.

2. A process according to claim 1, characterized in that said controlling is effected automatically, the switching pulses at measuring points Min 1 and Min 2 controlling said spraying breaks of washing the mist eliminators.

3. A process according to claim 2, characterized in that said switching pulses at measuring points Min 1 and Min 2 lead to stepwise prolongation or shortening of said spraying breaks of washing.

4. A process according to claims 1 to 3, characterized in that with flue gas desulfurization plants having two or more washing towers but only one absorbent supply tank, the differences in the resulting spraying breaks of each washing tower are measured, and are controlling the uniform distribution of absorbent suspension to each washing tower.

**Revendications**

1. Procédé de réglage du régime d'eau de dispositifs de désulfuration de gaz de fumée mouillés, en particulier de dispositifs à deux étages présentant du calcaire comme agent d'absorption et du plâtre comme produit final, par le niveau dans la cuve et la quantité d'eau de traitement amenée par le rinçage d'un séparateur de gouttes, caractérisé en ce que
   a) le niveau de la cuve est mesuré aux trois points Max, Min 1 et Min 2,
   b) le rinçage du séparateur de gouttes s'effectue en cycles variables à temps de vaporisation fixes mais à pauses de vaporisation variables;
   c) l'évacuation de la suspension de la cuve est commandée, par la séparation de matières grasses et le retour du liquide, en service normal uniquement par la densité de la
suspension dans la cuve dans le domaine
des points de mesure Min 1 et Min 2 et
uniquement en cas de besoin en cas de
dépassement du point de mesure Max, indépendamment de la densité de la suspension.

2.  Procédé suivant la revendication 1, caractérisé
en ce que le réglage se fait automatiquement,
les impulsions de déclenchement aux points
de mesure Min 1 et Min 2 commandant les
pauses de vaporisation du rinçage du séparateur de gouttes.

3.  Procédé suivant le revendication 2, caractérisé
en ce que les impulsions de déclenchement
aux points de mesure Min 1 et Min 2 prolongent ou raccourcissent progressivement les
pauses de vaporisation du rinçage.

4.  Procédé suivant l'une quelconque des revendications 1 à 3, caractérisé en ce que, dans les
dispositifs de désulfuration des gaz de fumée
présentant deux ou davantage de tours de
lavage mais seulement un réservoir d'alimentation d'agent d'absorption, les différences entre
les pauses de vaporisation s'ajustant des différentes tours de lavage sont mesurées et en ce
qu'elles commandent la répartition uniforme de
la suspension d'agent d'absorption sur les différentes tours de lavage.